# EUROPÄISCHE PATENTSCHRIFT

(11) **EP 2 612 174 B1**
(45) Veröffentlichungstag und Bekanntmachung des Hinweises auf die Patenterteilung: **18.06.2014**
(21) Anmeldenummer: 11743225.2
(22) Anmeldetag: 29.07.2011
(51) Int. Cl.: G01V 3/10

(54) **MESSVORRICHTUNG, INSBESONDERE MESSVORRICHTUNG ZUR ERFASSUNG METALLISCHER GEGENSTÄNDE**
MEASURING APPARATUS, PARTICULARLY MEASURING APPARATUS FOR SENSING METAL ARTICLES
DISPOSITIF DE MESURE, EN PARTICULIER DISPOSITIF DE MESURE POUR ENREGISTRER DES OBJETS MÉTALLIQUES

(30) Priorität: 30.08.2010 DE 102010039946
(43) Veröffentlichungstag der Anmeldung: 10.07.2013
(73) Patentinhaber: Robert Bosch GmbH, 70442 Stuttgart (DE)
(72) Erfinder: HAHL, Markus, 70825 Korntal-Muenchingen (DE); WIELAND, Christoph, 70563 Stuttgart-Vaihingen (DE); ALBRECHT, Andrej, 70567 Stuttgart (DE)
(86) Internationale Anmeldenummer: PCT/EP2011/063058
(87) Internationale Veröffentlichungsnummer: WO 2012/028401

(56) Entgegenhaltungen:
- DE-A1-102004 047 190
- DE-A1-102005 007 803
- US-A- 4 906 973
- US-A1- 2008 224 704

## Beschreibung

### Stand der Technik

Es sind Metallsuchgeräte bekannt, die bei der Auffindung von metallischen Gegenständen, die insbesondere in Wänden verborgen sein können, behilflich sind. Üblicherweise wird in einem solchen Metallsuchgerät mittels einer Sendespule ein alternierendes magnetisches Feld erzeugt. Ein Paar von elektrisch in Serie geschalteten, antiparallel ausgerichteten Empfangsspulen ist im Bereich des erzeugten Magnetfelds angeordnet. Befindet sich kein metallischer Gegenstand im Bereich der Spulen, haben in den beiden Empfangsspulen induzierte Spannungen entgegen gesetztes Vorzeigen und heben sich durch die Serienschaltung auf. Ist ein metallischer Gegenstand im Magnetfeld von den beiden Empfangsspulen ungleich weit entfernt, so werden in den Empfangsspulen ungleiche Spannungen induziert, so dass eine Empfangsspannung der elektrisch in Serie geschalteten Empfangsspulen ungleich Null wird. Die Empfangsspannung wird mittels eines Verstärkers verstärkt und anschließend mit einem Schwellenwert verglichen. Übersteigt die Empfangsspannung den Schwellenwert, so wird ein Signal ausgegeben, das auf den metallischen Gegenstand hinweist.

Um einen kleinen und/oder weit von den Spulen entfernten metallischen Gegenstand erfassen zu können, kann das durch die Sendespule erzeugte Magnetfeld stark sein und ein Verstärkungsfaktor des Verstärkers kann groß sein. Ein großer und/oder nahe an den Spulen befindlicher metallisches Gegenstand kann dann jedoch zu einer Empfangsspannung führen, die den Verstärker übersteuert. Eine genaue Bestimmung des Ortes bzw. der Grenzen des metallischen Gegenstandes kann durch die solchermaßen große Empfindlichkeit des Metallsuchgeräts gestört sein. Im Stand der Technik bekannt sind Metallsuchgeräte, deren Empfindlichkeit durch einen Benutzer manuell verstellt werden kann. Ferner ist aus der DE 10 2005 007 803 A1 ein Metallsuchgerät bekannt, bei dem unterschiedliche Empfindlichkeiten durch Ändern einer Frequenz der alternierenden Spannung an der Sendespule realisiert werden.

Eine derartige Frequenzverstellung ist jedoch schaltungstechnisch aufwändig und kann im Fall der Implementierung mittels eines programmierbaren Mikrocomputers eine relativ leistungsfähige Verarbeitungseinheit erfordern. In beiden Varianten können Herstellungskosten des Metallsuchgeräts erhöht sein.

Die DE 10 2004 047 190 A1 offenbart einen Detektor und ein Verfahren zur Ortung metallischer Objekte, mit einer Sendespule und zumindest zwei Empfangsspulen, die induktiv miteinander gekoppelt sind, wobei die mindestens zwei Empfangsspulen koaxial zueinander in einer Ebene angeordnet sind. Die Sendespule ist in einer dazu höhenversetzten, parallelen Ebene angeordnet ist. Benachbart, d. h. in der Nähe der Sendespule sind Kompensationswindungen mindestens einer Empfangsspule ausgebildet. Die beiden Sendespulen des Detektors der DE 10 2004 047 190 A1 werden von Sendern S1 und S2 mit Wechselströmen entgegengesetzter Phase gespeist. Damit induziert die erste Sendespule in der Empfangsspule einen Fluss, der dem von der zweiten Sendespule in der Empfangsspule induzierten Fluss entgegengesetzt gerichtet ist. Beide in der Empfangsspule induzierten Flüsse kompensieren sich gegenseitig, so dass der Empfänger E kein Empfangssignal in der Empfangsspule detektiert, falls sich kein externer, metallischer Gegenstand in der Nähe der Spulenanordnung befindet.

Der Erfindung liegt die Aufgabe zugrunde, eine Messvorrichtung zur Erfassung eines metallischen Gegenstands, ein Verfahren zur Erfassung des metallischen Gegenstands und ein Computerprogrammprodukt zur Durchführung des Verfahrens anzugeben, bei denen eine Anpassung der Empfindlichkeit der Erfassung auf einfache Weise möglich ist.

Die Erfindung löst diese Probleme mittels einer Vorrichtung mit den Merkmalen des Anspruchs 1, eines Verfahrens mit den Merkmalen des Anspruchs 7 und eines Computerprogrammprodukts mit den Merkmalen des Anspruchs 9. Unteransprüche geben bevorzugte Ausführungsformen an.

### Offenbarung der Erfindung

Nach einem ersten Aspekt umfasst eine erfindungsgemäße Messvorrichtung zur Erfassung eines metallischen Gegenstands eine Sendespule zur Erzeugung eines Magnetfelds, zwei Empfangsspulen, die derart im Bereich des Magnetfelds zueinander ausgerichtet und elektrisch miteinander verbunden sind, dass eine resultierende Empfangsspannung der Empfangsspulen Null ist, wenn das Magnetfeld in gleicher Weise auf beide Empfangsspulen wirkt, eine Steuereinrichtung zur Versorgung der Sendespule mit einer alternierenden Sendespannung und eine Bestimmungseinrichtung zur Bestimmung des metallischen Gegenstands auf der Basis der Empfangsspannung. Dabei ist die Steuereinrichtung dazu eingerichtet, einen Effektivwert der Sendespannung derart zu steuern, dass die Empfangsspannung unterhalb eines vorbestimmten Schwellenwerts bleibt.

Der Effektivwert der Sendespannung ist leichter beeinflussbar als deren Frequenz, so dass die Messvorrichtung relativ einfach aufgebaut sein kann.

In einer bevorzugten Ausführungsform ist die Steuereinrichtung dazu eingerichtet, der Sendespule ein pulsbreitenmoduliertes Signal bereitzustellen und den Effektivwert der Sendespannung anhand eines Tastverhältnisses des pulsbreitenmodulierten Signals zu steuern.

Eine Beeinflussung der Pulsbreite eines Signals mit fester Frequenz ist besonders einfach zu implementieren und kann vorteilhaft mittels eines programmierbaren Mikrocomputers geringer Leistung durchgeführt werden. Der programmierbare Mikrocomputer kann zugleich für weitere Steuerungsaufgaben innerhalb der Messvorrichtung verwendet werden, so dass ein hochgradig effizienter Aufbau eines Metallsuchgeräts erzielt werden kann. In einer besonders bevorzugten Ausführungsform ist das Signal ein Rechtecksignal und zur Umwandlung des Rechtecksignals in ein annähernd sinusförmiges Signal an der Sendespule sind keine weiteren Bauteile vorgesehen.

Die Steuereinrichtung kann dazu eingerichtet sein, den Effektivwert der Sendespannung in Abhängigkeit der Empfangsspannung zu verändern. Dadurch kann eine Erweiterung des Dynamikbereichs der Messvorrichtung erzielt werden, die für einen Anwender der Messvorrichtung weitgehend transparent ist. In einer weiteren Ausführungsform erfolgt die Kompensation der Änderung der Empfindlichkeit beispielsweise auf kalkulatorischem Weg innerhalb der Steuereinrichtung, so dass die Empfindlichkeitsänderung in dem mittels der Ausgabeeinrichtung ausgegebenen Wert teilweise oder vollständig kompensiert ist.

Es kann ein Empfangsverstärker zur Verstärkung der Empfangsspannung vorgesehen sein, wobei ein Verstärkungsfaktor des Empfangsverstärkers in Abhängigkeit des Effektivwerts der Sendespannung veränderbar ist.

Die Erweiterung des Dynamikbereichs der Messvorrichtung kann dadurch noch transparenter gestaltet werden; zusätzlich kann ein Übersteuern des Empfangsverstärkers vermieden werden, wodurch eine verbesserte Ausnutzung des Dynamikbereichs der Messvorrichtung ermöglicht und eine erzielbare Genauigkeit der Bestimmung des metallischen Gegenstands verbessert sein können.

In einer ersten Variante kann der Effektivwert der Sendespannung stufenlos veränderbar sein. Dadurch kann eine leichtere Bedienbarkeit der Messvorrichtung unterstützt werden. In einer zweiten Variante kann der Effektivwert der Sendespannung in diskreten Stufen veränderbar sein. Gewisse Varianten der Beeinflussung des Effektivwerts der Sendespannung können bei einer Beschränkung auf diskrete Stufen der Sendespannung vereinfacht umsetzbar sein.

Nach einem zweiten Aspekt umfasst ein Verfahren zur Erfassung eines metallischen Gegenstands Schritte des Versorgens einer Sendespule mit einer alternierenden Sendespannung, um ein Magnetfeld zu erzeugen, des Bestimmens einer Empfangsspannung, die an zwei Empfangsspulen anliegt, die derart ausgerichtet und elektrisch miteinander verbunden sind, dass die Empfangsspannung Null ist, wenn das Magnetfeld in gleicher Weise auf beide Empfangsspulen wirkt, des Erfassen des metallischen Gegenstands auf der Basis der bestimmten Empfangsspannung und des Steuerns eines Effektivwerts der Sendespannung derart, dass die Empfangsspannung unterhalb eines vorbestimmten Schwellenwerts bleibt.

Bevorzugterweise ist die alternierende Sendespannung ein pulsbreitenmoduliertes Signal und der Effektivwert der Sendespannung wird mittels eines Tastverhältnisses des Signals gesteuert.

Nach einem dritten Aspekt umfasst ein Computerprogrammprodukt Programmcodemittel zur Durchführung des beschriebenen Verfahrens, wenn das Computerprogrammprodukt auf einer Verarbeitungseinrichtung abläuft, wobei es auf einem computerlesbaren Medium abgespeichert sein kann.

### Kurze Beschreibung der Figuren

Die Erfindung wird nun mit Bezug auf die beigefügten Figuren genauer beschrieben, in denen:
- Fig. 1: eine Messvorrichtung für ein Metallsuchgerät;
- Fig. 2: ein Diagramm zur Veranschaulichung der Funktionsweise der Messvorrichtung aus Fig. 1;
- Fig. 3: eine alternative Ausführungsform der Sendespule aus Fig. 1;
- Fig. 4: eine alternative Beeinflussung des Effektivwerts der Sendespannung in Fig. 1;
- Fig. 5: eine Darstellung unterschiedlicher Sendespannungen an der Sendespule von Fig. 1;
- Fig. 6: eine weitere alternative Beeinflussung des Effektivwerts der Sendespannung in Fig. 1;
- Fig. 7: eine Darstellung unterschiedlicher Tastverhältnisse des Tastsignals in Fig. 1; und
- Fig. 8: ein Ablaufdiagramm eines Verfahrens zur Steuerung der Messvorrichtung von Fig. 1

darstellt.

### Beschreibung von Ausführungsbeispielen

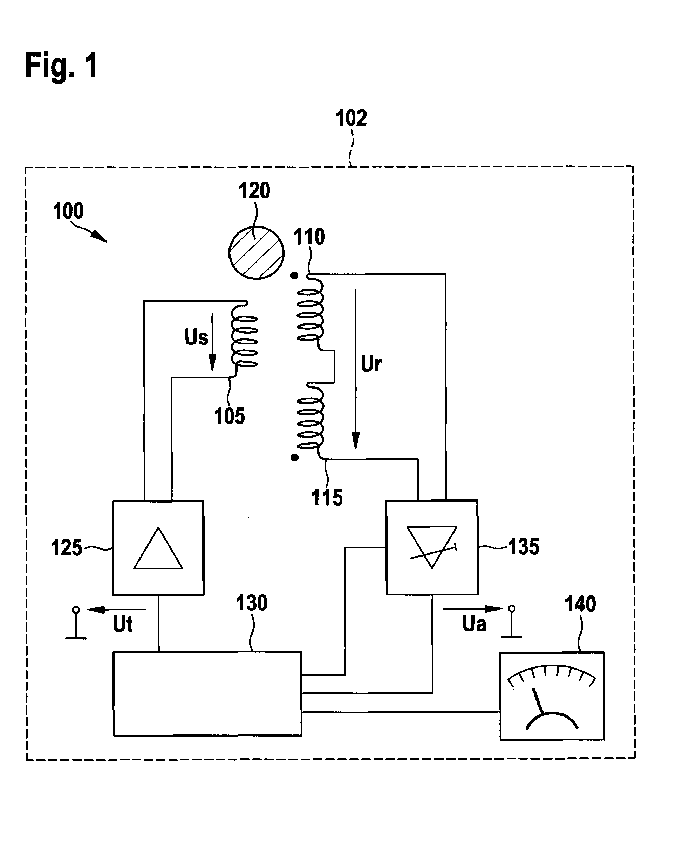

Fig. 1 zeigt eine Messvorrichtung 100 in einem Metallsuchgerät 102. Die Messvorrichtung 100 umfasst eine Sendespule 105, die im Bereich einer ersten Empfangsspule 110 und einer zweiten Empfangsspule 115 angeordnet ist. Die Empfangsspulen 110 und 115 sind derart im Bereich des Magnetfelds zueinander ausgerichtet und elektrisch miteinander verbunden, dass eine resultierende Empfangsspannung an den Empfangsspulen Null ist, wenn das Magnetfeld in gleicher Weise auf beide Empfangsspulen wirkt.

Insbesondere sind die Empfangsspulen 110 und 115 so ausgerichtet, dass Längsachsen, um die Windungen der Empfangsspulen 110 und 115 gewunden sind, parallel zueinander verlaufen. Beispielsweise können die Empfangsspulen 110, 115 konzentrisch zueinander oder miteinander fluchtend angeordnet sein. Je nach der Richtung, in der die Windungen der Empfangsspulen 110, 115 um die Längsachsen gewunden sind, wird in jeder der Empfangsspulen 110, 115 durch eine Flussänderung eines externen Magnetfeldes eine positive oder negative Spannung induziert. Dabei ist ein positiver Anschluss einer der Empfangsspulen 110, 115 mit einem negativen Anschluss der anderen Empfangsspule 110, 115 elektrisch verbunden, so dass die induzierten Spannungen einander entgegenwirken und die insgesamte Empfangsspannung, die an den jeweils anderen Anschlüssen der Empfangsspulen 110, 115 anliegt, Null ist, falls die Flussänderung beide Empfangsspulen 110, 115 in gleicher Weise betrifft. Die Erfindung ist mit zahlreichen im Stand der Technik bekannten Anordnungen dieser Art einsetzbar.

Die Messvorrichtung 100 ist dazu eingerichtet, einen metallisches Gegenstand 120, welcher sich im Bereich der Spulen 105 bis 115 befindet, zu bestimmen.

Die Sendespule 105 wird mit einer alternierenden Spannung Us angesteuert, die durch einen Sendeverstärker 125 bereitgestellt wird. Der Sendeverstärker 125 kann ein analoger oder digitaler Verstärker sein. In einer einfachen Ausführungsform umfasst der Sendeverstärker 125 lediglich einen Transistor, der vorzugsweise als Schalter betrieben wird. In einer anderen Ausführungsform umfasst der Sendeverstärker 125 vier Transistoren in H-Schaltung, wobei alle vier Transistoren als Schalter betrieben werden.

Der Sendeverstärker 125 wird angesteuert durch ein Tastsignal Ut, das von einer Steuereinrichtung 130 bereitgestellt wird. Die Steuereinrichtung 130 ist vorzugsweise als programmierbarer Mikrocomputer aufgebaut. Vorzugsweise wird das Tastsignal Ut über einen digitalen Ausgabeanschluss ("Port") der Steuereinrichtung 130 ausgegeben.

Der Ausgabeanschluss kann durch einen innerhalb der Steuereinrichtung 130 vorgesehenen programmierbaren Zeitgeber oder Zähler gesteuert sein. Die Steuereinrichtung 130 kann mittels des Zeitgebers dazu veranlasst werden, das Tastsignal Ut von einem hohen auf einen niedrigen Wert bzw. umgekehrt umzuschalten. Eine solche Veranlassung erfolgt üblicherweise mittels einer Unterbrechungsaufforderung ("Interrupt") des Zeitgebers an die Steuereinrichtung 130. Zwischen den Unterbrechungen kann die Steuereinrichtung 130 andere Aufgaben wahrnehmen, beispielsweise eine Interaktion mit einem Benutzer.

Die Zeit zwischen zwei aufeinanderfolgenden Übergängen des Tastsignals Ut von einem hohen Wert auf einen niedrigen Wert ist immer die gleiche, jedoch kann die Zeit, während derer das Tastsignal auf dem hohen Wert bleibt, durch die Steuereinrichtung 130 beeinflusst werden, wodurch auch die Zeit, während derer das Tastsignal auf dem niedrigen Wert bleibt, beeinflusst wird. Ein Verhältnis dieser beiden Zeitdauern wird Tastverhältnis genannt und üblicherweise in Prozent angegeben. Sind beide Zeitdauern gleich, so beträgt das Tastverhältnis 50%. Das Tastsignal ist auf diese Weise pulsbreitenmoduliert, man spricht auch von einem PWM-Signal ("Pulse Width Modulated Signal").

Durch Beeinflussung des Tastverhältnisses des Tastsignals Ut wird auch ein Effektivwert der Sendespannung Us an der Sendespule 105 geändert. Der Effektivwert (auch: RMS-Wert, "Root Mean Square") ist der quadratische Mittelwert der an der Sendespule 105 anliegenden alternierenden Sendespannung Us und gibt an, welche Gleichspannung an der Sendespule 105 eine entsprechende elektrische Leistung bewirken würde, wenn die Sendespule 105 als ohmscher Verbraucher angesehen wird. Über den Effektivwert der Sendespannung Us ist die Stärke eines durch die Sendespule 105 erzeugten Magnetfelds steuerbar.

Durch Beeinflussung des Effektivwertes der Sendespannung Us an der Sendespule 105 mittels Pulsweitenmodulation bleibt die durchschnittliche Anzahl von Unterbrechungsanforderungen an die Steuerungseinrichtung 130 während eines Zeitabschnitts gleich, auch wenn sich das Tastverhältnis der Pulsweitenmodulation ändert. Die Unterbrechnungs-Last der Steuereinrichtung 130 bleibt somit konstant, so dass andere Aufgaben der Steuereinrichtung 130 weitgehend unabhängig vom Tastverhältnis bewältigt werden können.

Die miteinander seriell verschalteten Empfangsspulen 110 und 115 sind mit einem Empfangsverstärker 135 verbunden, so dass dieser eine Empfangsspannung Ur der Empfangsspulen 110, 115 verstärken kann. Der Empfangsverstärker 135 besitzt einen Verstärkungsfaktor, der in einer bevorzugten Ausführungsform mittels der Steuereinrichtung 130 beeinflussbar ist. Der Empfangsverstärker stellt der Steuereinrichtung 130 über eine entsprechende Verbindung eine Ausgangsspannung Ua bereit, die der um den Verstärkungsfaktor verstärkten Empfangsspannung Ur entspricht. Zur Auswertung der Ausgangsspannung Ua kann die Steuereinrichtung 130 über einen geeigneten Analog-Digital-Wandler verfügen.

Ferner ist die Steuereinrichtung 130 mit einer Ausgabeeinrichtung 140 verbunden. Die Ausgabeeinrichtung 140 ist dazu eingerichtet, analog oder digital optische und/oder akustische Signale auszugeben. Die Steuereinrichtung 130 ist dazu eingerichtet, die Ausgabeeinrichtung 140 in Abhängigkeit der durch den Empfangsverstärker 135 bereitgestellten, verstärkten Empfangsspannung Ur anzusteuern, so dass einem Benutzer der Messvorrichtung 100 bzw. des Metallsuchgeräts 102 ein Hinweis auf den metallischen Gegenstand 120 gegeben wird. In einer Variante wird die Ausgabeeinrichtung 140 unmittelbar durch die vom Empfangsverstärker 135 bereitgestellte Ausgangsspannung Ua gesteuert und die Steuereinrichtung lässt die Ausgabeeinrichtung 140 unbeeinflusst. Hierfür sind der Empfangsverstärker 135 und die Ausgabeeinrichtung 140 über eine entsprechende Verbindung unmittelbar miteinander verbunden.

Das von der Steuereinrichtung 130 bereitgestellte Tastsignal Ut ist ein pulsbreitenmoduliertes Rechtecksignal, das durch den Sendeverstärker 125 verstärkt und der Sendespule 105 bereitgestellt wird. Üblicherweise findet eine Umwandlung des Rechtecksignals in ein sinusförmiges Signal durch parasitäre Effekte im Bereich des Sendeverstärkers 125 und der Sendespule 105 in einem ausreichenden Maße statt, so dass durch die Ansteuerung der Sendespule 105 bedingte Oberwellen ausreichend reduziert werden. Eine Reduktion von Oberwellen in der Empfangsspannung Ur wird durch die magnetische Kopplung der Sendespule 105 mit den Empfangsspulen 110 und 115 sowie durch eine Übertragungscharakteristik des Empfangsverstärkers 135 erreicht.

Das in Abhängigkeit von der alternierenden Sendespannung Us durch die Sendespule 105 erzeugte Magnetfeld wirkt zunächst in gleicher Weise auf die erste Empfangsspule 110 und die zweite Empfangsspule 115 und induziert in beiden Empfangsspulen 110, 115 jeweils eine Spannung. Da die Empfangsspulen 110 und 115 antiparallel ausgerichtet sind, beträgt die Empfangsspannung Ur der seriell miteinander verschalteten Empfangsspulen 110 und 115 insgesamt Null. Befindet sich der metallische Gegenstand 120 im Bereich des erzeugten Magnetfelds, so dass er näher an einer der Empfangsspulen 110, 115 als an der anderen liegt, so wirkt das durch die Sendespule 105 generierte Magnetfeld ungleich auf die Sendespulen 110 und 115, so dass die Empfangsspannung Ur von Null verschieden ist. Die Größe der Empfangsspannung Ur ist abhängig von einem Verhältnis der Abstände des metallischen Gegenstands 120 zu den Empfangsspulen 110 und 115 sowie einer Größe des metallischen Gegenstands 120.

In Abhängigkeit der Empfangsspannung Ur bzw. der Ausgangsspannung Ua steuert die Steuereinrichtung 130 das Tastverhältnis des Tastsignals Ut. Dadurch ändert sich ein Effektivwert der Sendespannung Us und in Folge auch die Stärke des durch die Sendespule 105 generierten Magnetfelds. Beträgt die Empfangsspannung Ur beispielsweise Null, so wird das Tastsignal Ut auf ein Tastverhältnis von 50% eingestellt, so dass die Stärke des durch die Sendespule 105 bereitgestellten Magnetfeldes maximal ist. Dadurch ist eine Empfindlichkeit der Messvorrichtung 100 maximal.

Ist die verstärkte Empfangsspannung Ur jedoch groß, so wird das Tastverhältnis des Tastsignals Ut auf einen kleinen Wert eingestellt, beispielsweise 2%. Das durch die Sendespule 105 erzeugte Magnetfeld ist dadurch gegenüber der zuvor beschriebenen Situation stark verringert, so dass das Empfangssignal Ur ebenfalls kleiner wird. Dadurch ist eine Empfindlichkeit der Messvorrichtung 100 reduziert.

In einer alternativen Ausführungsform beeinflusst die Steuereinrichtung 130 den Verstärkungsfaktor des Empfangsverstärkers 135 nicht sondern sorgt durch eine entsprechende Ansteuerung der Ausgabeeinrichtung 140 dafür, dass ein Benutzer auf die gegenwärtig verwendete Empfindlichkeit der Messeinrichtung 100 hingewiesen wird.

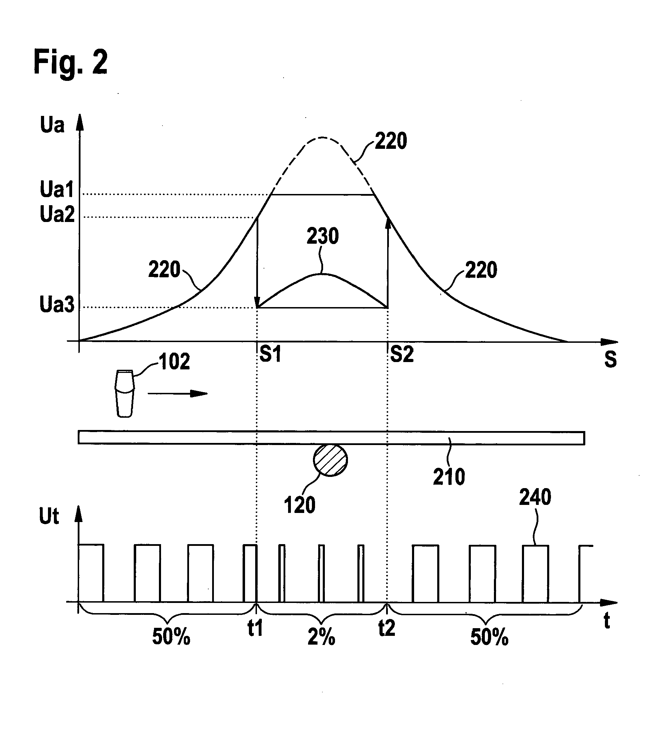

Fig. 2 zeigt ein Diagramm 200 zur Veranschaulichung der Funktionsweise der Messvorrichtung 100 aus Fig. 1. In einem mittleren Bereich von Fig. 2 sind das Metallsuchgerät 102 und der metallische Gegenstand 120 aus Fig. 1 dargestellt, die durch eine Wand 210 voneinander getrennt sind. Das Metallsuchgerät 102 wird in horizontaler Richtung parallel zur Wand 210 verfahren.

In einem oberen Bereich von Fig. 2 ist in horizontaler Richtung eine Strecke S aufgetragen, die eine Position des Metallsuchgeräts 102 entlang des Verfahrwegs an der Wand 210 beschreibt. In vertikaler Richtung ist die vom Empfangsverstärker 135 bereitgestellte Ausgangsspannung Ua aufgetragen. Ein erster Spannungsverlauf 220 im Diagramm 200 zeigt einen theoretischen Verlauf der Ausgangsspannung Ua des Empfangsverstärkers 135 während des Verfahrens des Metallsuchgeräts 102 entlang der Wand 210. Der erste Spannungsverlauf 220 hat in Etwa die Form einer Glockenkurve.

Befindet sich das Metallsuchgerät 102 in einem Abschnitt zwischen S1 und S2 entlang der Wand 210, so ist es so nahe am metallischen Gegenstand 120, dass der Empfangsverstärker 135 entgegen der idealen Annahmen des ersten Spannungsverlaufs 220 in diesem Bereich übersteuert und die Ausgangsspannung Ua eine maximale Ausgangsspannung Ua1 nicht übersteigt. Allgemein kann jeder Verstärker mit einem Verstärkungsfaktor größer als Eins durch ein entsprechend großes Eingangssignal zum Übersteuern gebracht werden.

Um das Übersteuern zu vermeiden, wird, wenn der erste Spannungsverlauf 220 einen ersten Schwellenwert Ua2 erreicht, ein Effektivwert der Sendespannung Us an der Sendespule 105 der Messvorrichtung 100 in Fig. 1 reduziert, so dass sich zwischen S1 und S2 ein zweiter Spannungsverlauf 230 einstellt. Der zweite Spannungsverlauf 230 hat im Wesentlichen die gleiche Form wie der erste Spannungsverlauf 220 in dem betreffenden Abschnitt, ist jedoch um einen vorbestimmten Faktor verringert.

In einem unteren Abschnitt von Fig. 2 ist in vertikaler Richtung ein Verlauf des Tastsignals Ut über eine Zeit t in horizontaler Richtung angegeben. Unter Voraussetzung einer gleichmäßigen Bewegungsgeschwindigkeit des Metallsuchgeräts 102 entlang der Wand 210 ist diese Darstellung mit dem Diagramm 200 im oberen Abschnitt von Fig. 2 vergleichbar. Durch die Variation des Tastverhältnisses des Tastsignals Ut wird der Effektivwert der Sendespannung Us in Fig. 1 verändert, wodurch letztlich auch die Stärke des Ausgangssignals Ua verändert wird.

In einem Abschnitt links von der Stelle S1, die zu einem Zeitpunkt t1 korrespondiert, beträgt das Tastverhältnis des Tastsignals Ut 50%. Von S1 aus nach rechts dort aus bis zur Stelle S2, die zu einem Zeitpunkt t2 korrespondiert, beträgt das Tastverhältnis nur noch 2%. Rechts von der Stelle S2 bzw. dem Zeitpunkt t2 beträgt das Tastverhältnis wieder 50%.

In der in Fig. 2 dargestellten Ausführungsform wird der Effektivwert der Sendespannung Us der Sendespule 105 in zwei diskreten Stufen verändert, die den Tastverhältnissen 50% und 2% entsprechen. In anderen Ausführungsformen der Erfindung sind auch andere bzw. mehr unterschiedliche Tastverhältnisse möglich. Die Veränderung der Tastverhältnisse kann auch stufenlos erfolgen. In allen Fällen gilt, dass der Effektivwert der an der Sendespule 105 anliegenden Sendespannung Us maximal ist, wenn das Tastverhältnis des Tastsignals Ut 50% entspricht.

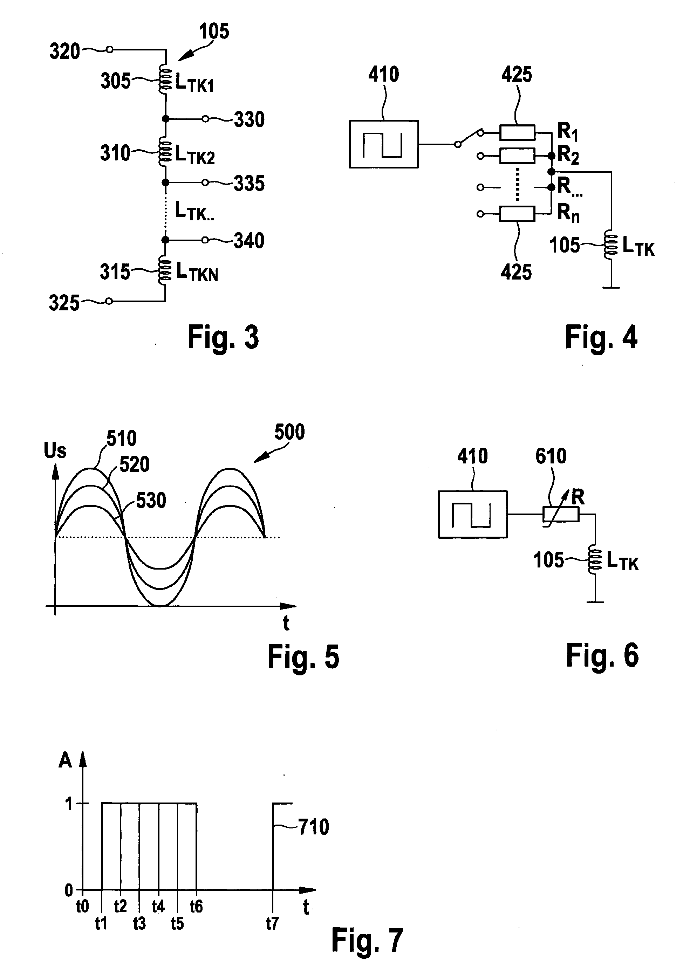

Fig. 3 zeigt eine alternative Ausführungsform der Sendespule 105 aus Fig. 1. Die Sendespule 105 ist als Serie von Teil-Sendespulen 305, 310 und 315 aufgebaut. Dadurch ergeben sich neben Endabgriffen 320 und 325 auch eine Anzahl von Zwischenabgriffen 330, 335, 340. Beliebige zwei der Abgriffe 320 bis 340 können mit dem Sendeverstärker 125 aus Fig. 1 verbunden werden, wobei die Wahl der Abgriffe 320 bis 340 eine Anzahl von Windungen bestimmt, die die zwischen den Abgriffen 320 bis 340 liegenden Teil-Sendespulen 305 bis 315 insgesamt aufweisen. Dadurch kann die Induktivität der Sendespule 105 verändert werden, wodurch die Stärke des durch die Sendespule 105 generierten Magnetfeldes variiert. Gleichzeitig ändern sich die elektrischen Eigenschaften der Sendespule 105, so dass durch Variieren der Induktivität auch der Effektivwert der Sendespannung Us variiert wird.

Fig. 4 zeigt eine alternative Beeinflussung des Effektivwerts der Sendespannung in Fig. 1. Ein Rechteckgenerator 410 stellt eine vorzugsweise symmetrische Rechteckspannung bereit. Mittels eines Mehrfachumschalters 420 wird das durch den Rechteckgenerator 410 bereitgestellte Signal mit einem ersten Anschluss eines von mehreren unterschiedlichen Widerständen 425 verbunden. Jeweils zweite Anschlüsse der Widerstände 425 sind mit einem der Anschlüsse der Sendespule 105 verbunden. Der zweite Anschluss der Sendespule 105 ist elektrisch mit Masse verbunden. Durch Umschalten des Mehrfachumschalters 420 wird jeweils ein anderer der Widerstände 425 in Serie zur Sendespule 105 geschaltet, wodurch ein Strom durch die Sendespule 105 und damit auch der Effektivwert der Sendespannung Us variiert wird.

Fig. 5 zeigt eine Darstellung 500 unterschiedlicher Sendespannungen Us an der Sendespule 105 in Fig. 1. In einer horizontalen Richtung ist eine Zeit t aufgetragen, in einer vertikalen Richtung ist die Sendespannung Us aufgetragen. Ein erster Verlauf 510 korrespondiert zu einem Tastverhältnis von 50% des Tastsignals Ut. Ein zweiter Verlauf 520 mit einer geringeren Amplitude korrespondiert zu einem Tastverhältnis von ca. 10%. Ein dritter Verlauf 530 mit einer weiter verringerten Amplitude korrespondiert zu einem Tastverhältnis von ca. 2%.

Fig. 6 zeigt eine weitere alternative Beeinflussung des Effektivwerts der Sendespannung Us in Fig. 1. Die dargestellte Schaltung entspricht der von Fig. 4, wobei der Mehrfachumschalter 420 und die Widerstände 425 durch einen variablen Widerstand 610 ersetzt sind. Durch Variieren des Widerstandswerts des variablen Widerstands 610 ist eine kontinuierliche Beeinflussung des Stroms bzw. des Effektivwerts der Spannung an der Sendespule 105 möglich.

Fig. 7 zeigt eine Darstellung unterschiedlicher Tastverhältnisse des dem Sendeverstärker 125 in Fig. 1 bereitgestellten Tastsignals Ut. Ein Verlauf 710 ist zwischen einer niedrigen Amplitude 0 und einer hohen Amplitude 1 dargestellt. Dabei kann der Verlauf 710 bei gleichbleibender Frequenz unterschiedliche Tastverhältnisse aufweisen. In jedem der im Folgenden beschriebenen Fälle steigt die Amplitude des Verlaufs 710 zu einem Zeitpunkt t1 und danach zu einem Zeitpunkt t7 erneut von 0 auf 1.

In einem ersten Fall fällt die Amplitude des Verlaufs 710 zu einem Zeitpunkt t2 von 1 auf 0 ab, was einem Tastverhältnis von ca. 10% entspricht.

In einem zweiten Fall fällt die Amplitude des Verlaufs 710 zu einem Zeitpunkt t3 von 1 auf 0 ab, was einem Tastverhältnis von ca. 20% entspricht.

In einem dritten Fall fällt die Amplitude des Verlaufs 710 zu einem Zeitpunkt t4 von 1 auf 0 ab, was einem Tastverhältnis von 30% entspricht.

In einem vierten Fall fällt die Amplitude des Verlaufs 710 zu einem Zeitpunkt t5 von 1 auf 0 ab, was einem Tastverhältnis von 40% entspricht.

In einem vierten Fall fällt die Amplitude des Verlaufs 710 zu einem Zeitpunkt t6 von 1 auf 0 ab, was einem Tastverhältnis von 50% entspricht.

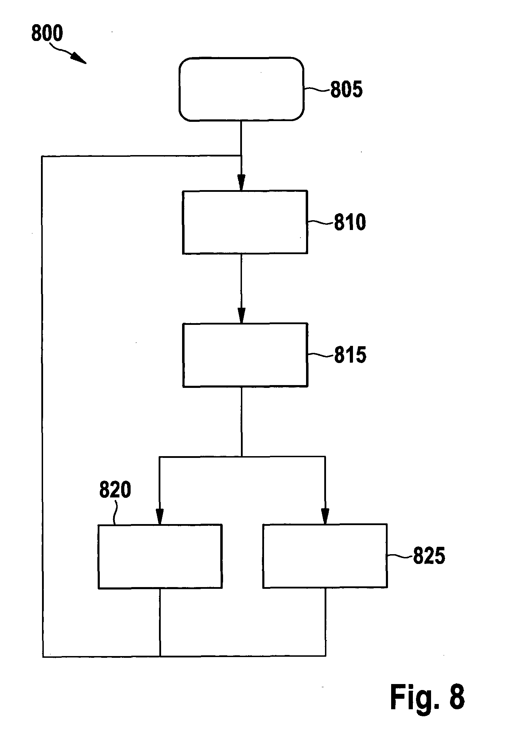

Fig. 8 zeigt ein Ablaufdiagramm eines Verfahrens 800 zur Steuerung der Messvorrichtung 100 aus Fig. 1. In einem ersten Schritt 805 befindet sich das Verfahren 800 im Startzustand.

Danach wird in einem Schritt 810 die Sendespule 105 mit der alternierenden Sendespannung Us versorgt, so dass die Sendespule 105 ein Magnetfeld im Bereich der Empfangsspulen 105, 110 erzeugt.

Anschließend wird in einem Schritt 815 die Empfangsspannung Ur bzw. die Ausgangsspannung Ua bestimmt, die auf der Empfangsspannung Ur basiert, die in den Empfangsspulen 105, 110 in Summe durch das erzeugte Magnetfeld induziert ist.

Anschließend wird in einem Schritt 820 auf der Basis der im Schritt 815 bestimmten Spannung der Gegenstand 120 erfasst. Parallel dazu wird in einem Schritt 825 der Effektivwert der Sendespannung Us gesteuert. Das Steuern des Effektivwerts der Sendespannung Us erfolgt bevorzugterweise in Abhängigkeit der erfassten Ausgangsspannung Ua.

Anschließend kehrt das Verfahren 800 zum Schritt 810 zurück und durchläuft erneut.

## Patentansprüche

1. Messvorrichtung (100), insbesondere eine Messvorrichtung zur Erfassung metallischer Gegenstände (120), wobei die Messvorrichtung (100) zumindest folgendes umfasst:
- eine Sendespule (105) zur Erzeugung eines Magnetfelds;
- zwei Empfangsspulen (110, 115), die derart im Bereich des Magnetfelds zueinander ausgerichtet und elektrisch miteinander verbunden sind, dass eine resultierende Empfangsspannung an den Empfangsspulen (110, 115) Null ist, wenn das Magnetfeld in gleicher Weise auf beide Empfangsspulen (110, 115) wirkt;
- eine Steuereinrichtung (130) zur Versorgung der Sendespule (105) mit einer alternierenden Sendespannung;
- eine Bestimmungseinrichtung (130) zur Bestimmung des metallischen Gegenstands (120) auf der Basis der Empfangsspannung (Ue);
**dadurch gekennzeichnet, dass**
- die Steuereinrichtung (130) dazu eingerichtet ist, einen Effektivwert der Sendespannung (Us) derart zu verändern, dass die Empfangsspannung (Ue) unabhängig von der Größe des metallischen Gegenstands (120) unterhalb eines vorbestimmten Schwellenwerts (Ua2) bleibt.

2. Messvorrichtung (100) nach Anspruch 1, **dadurch gekennzeichnet, dass** die Steuereinrichtung (130) dazu eingerichtet ist, der Sendespule (105) ein pulsbreitenmoduliertes Signal (Ut) bereitzustellen und den Effektivwert der Sendespannung (Us) anhand eines Tastverhältnisses des pulsbreitenmodulierten Signals (Ut) zu steuern.

3. Messvorrichtung (100) nach Anspruch 2, **dadurch gekennzeichnet, dass** die Steuereinrichtung (130) dazu eingerichtet ist, den Effektivwert der Sendespannung (Us) in Abhängigkeit der Empfangsspannung (Ue) zu verändern.

4. Messvorrichtung (100) nach einem der vorangehenden Ansprüche, **dadurch gekennzeichnet, dass** ein Empfangsverstärker (135) zur Verstärkung der Empfangsspannung (Ue) vorgesehen ist, wobei ein Verstärkungsfaktor des Empfangsverstärkers (135) in Abhängigkeit des Effektivwerts der Sendespannung (Us) veränderbar ist.

5. Messvorrichtung (100) nach einem der vorangehenden Ansprüche, **dadurch gekennzeichnet, dass** die Sendespannung (Us) stufenlos veränderbar ist.

6. Messvorrichtung (100) nach einem der Ansprüche 1 bis 4, **dadurch gekennzeichnet, dass** die Sendespannung (Us) in zwei diskreten effektive Stufen veränderbar ist.

7. Verfahren zur Erfassung eines metallischen Gegenstands (120), folgende Schritte zumindest umfassend:
- Versorgen einer Sendespule (105) mit einer alternierenden Sendespannung (Us), um ein Magnetfeld zu erzeugen;
- Bestimmen einer Empfangsspannung (Ue), die an zwei Empfangsspulen anliegt, die derart ausgerichtet und elektrisch miteinander verbunden sind, dass die Empfangsspannung Null ist, wenn das Magnetfeld in gleicher Weise auf beide Empfangsspulen wirkt;
- Erfassen des metallischen Gegenstands (120) auf der Basis der bestimmten Empfangsspannung (Ue); und
- Steuern eines Effektivwerts der Sendespannung (Us) derart, dass die Empfangsspannung (Ue) unterhalb eines vorbestimmten Schwellenwerts bleibt.

8. Verfahren nach Anspruch 7, wobei die alternierende Sendespannung (Us) ein pulsbreitenmoduliertes Signal (Ut) ist und der Effektivwert der Sendespannung (Us) mittels eines Tastverhältnisses des Signals (Ut)gesteuert wird.

9. Computerprogrammprodukt mit Programmcodemitteln zur Durchführung des Verfahrens nach einem der Ansprüche 7 oder 8, wenn das Computerprogrammprodukt auf einer Verarbeitungseinrichtung abläuft.

10. Computerprogrammprodukt nach Anspruch 9, wobei das Computerprogrammprodukt auf einem computerlesbaren Medium abgespeichert ist.

## Claims

1. Measuring apparatus (100), particularly a measuring apparatus for sensing metal articles (120), wherein the measuring apparatus (100) comprises at least the following:
- a transmission coil (105) for generating a magnetic field;
- two reception coils (110, 115) which are oriented relative to one another and electrically connected to one another in the region of the magnetic field in such a way that a resulting reception voltage across the reception coils (110, 115) is zero when the magnetic field acts on both reception coils (110, 115) in the same way;
- a control device (130) for supplying an alternating transmission voltage to the transmission coil (105);
- a determination device (130) for determining the metal article (120) on the basis of the reception voltage (Ue);
**characterized in that**
- the control device (130) is designed to change a root mean square value of the transmission voltage (Us) in such a way that the reception voltage (Ue) remains below a predetermined threshold value (Ua2) irrespective of the size of the metal article (120).

2. Measuring apparatus (100) according to Claim 1, **characterized in that** the control device (130) is designed to provide a pulse-width-modulated signal (Ut) to the transmission coil (105) and to control the root mean square value of the transmission voltage (Us) on the basis of a duty cycle of the pulse-width-modulated signal (Ut).

3. Measuring apparatus (100) according to Claim 2, **characterized in that** the control device (130) is designed to change the root mean square value of the transmission voltage (Us) depending on the reception voltage (Ue).

4. Measuring apparatus (100) according to one of the preceding claims, **characterized in that** a reception amplifier (135) is provided for amplifying the reception voltage (Ue), wherein an amplification factor of the reception amplifier (135) can be changed depending on the root mean square value of the transmission voltage (Us).

5. Measuring apparatus (100) according to one of the preceding claims, **characterized in that** the transmission voltage (Us) can be changed continuously.

6. Measuring apparatus (100) according to one of Claims 1 to 4, **characterized in that** the transmission voltage (Us) can be changed in two discrete effective stages.

7. Method for sensing a metal article (120), at least comprising the following steps:
- supplying an alternating transmission voltage (Us) to a transmission coil (105) in order to generate a magnetic field;
- determining a reception voltage (Ue) which is applied to two reception coils which are oriented and electrically connected to one another in such a way that the reception voltage is zero when the magnetic field acts on both reception coils in the same way;
- sensing the metal article (120) on the basis of the determined reception voltage (Ue); and
- controlling a root mean square value of the transmission voltage (Us) in such a way that the reception voltage (Ue) remains below a predetermined threshold value.

8. Method according to Claim 7, wherein the alternating transmission voltage (Us) is a pulse-width-modulated signal (Ut), and the root mean square value of the transmission voltage (Us) is controlled by means of a duty cycle of the signal (Ut).

9. Computer program product having program coding means for carrying out the method according to either of Claims 7 and 8 when the computer program product is run on a processing device.

10. Computer program product according to Claim 9, wherein the computer program product is stored on a computer-readable medium.

## Revendications

1. Dispositif de mesure (100), notamment dispositif de mesure pour enregistrer des objets métalliques (120), le dispositif de mesure (100) comprenant au moins les éléments suivants :
- une bobine d'émission (105) servant à produire un champ magnétique ;
- deux bobines de réception (110, 115) orientées de telle sorte les unes par rapport aux autres dans la zone du champ magnétique et reliées de telle sorte électriquement l'une à l'autre que la tension de réception résultante obtenue au niveau des bobines de réception (110, 115) est nulle lorsque le champ magnétique agit de la même façon sur les deux bobines de réception (110, 115) ;
- un dispositif de commande (130) servant à alimenter la bobine d'émission (105) avec une tension d'émission alternative ;
- un dispositif de détermination (130) servant à déterminer l'objet métallique (120) sur la base de la tension de réception (Ue) ;
**caractérisé en ce que** :
- le dispositif de commande (130) est conçu pour faire varier une valeur efficace de la tension d'émission (Us) de telle sorte que la tension de réception (Ue) reste en dessous d'une valeur seuil prédéterminée (Ua2) indépendamment de la taille de l'objet métallique (120).

2. Dispositif de mesure (100) selon la revendication 1, **caractérisé en ce que** le dispositif de commande (130) est conçu pour mettre à disposition de la bobine d'émission (105) un signal modulé en largeur d'impulsion (Ut) et pour commander la valeur efficace de la tension d'émission (Us) à l'aide d'un facteur impulsion/pause du signal modulé en largeur d'impulsion (Ut).

3. Dispositif de mesure (100) selon la revendication 2, **caractérisé en ce que** le dispositif de commande (130) est conçu pour faire varier la valeur efficace de la tension d'émission (Us) en fonction de la tension de réception (Ue).

4. Dispositif de mesure (100) selon l'une quelconque des revendications précédentes, **caractérisé en ce qu'**un amplificateur de réception (135) est prévu pour renforcer la tension de réception (Ue), un facteur de renforcement de l'amplificateur de réception (135) pouvant varier en fonction de la valeur efficace de la tension d'émission (Us).

5. Dispositif de mesure (100) selon l'une quelconque des revendications précédentes, **caractérisé en ce que** la tension d'émission (Us) peut varier en continu.

6. Dispositif de mesure (100) selon l'une quelconque des revendications 1 à 4, **caractérisé en ce que** la tension d'émission (Us) peut varier suivant deux niveaux efficaces distincts.

7. Procédé pour enregistrer un objet métallique (120), comprenant au moins les étapes suivantes :
- alimentation d'une bobine d'émission (105) avec une tension d'émission alternative (Us) en vue de produire un champ magnétique ;
- détermination d'une tension de réception (Ue) obtenue au niveau de deux bobines de réception orientées et reliées électriquement de telle sorte l'une à l'autre que la tension de réception est nulle lorsque le champ magnétique agit de la même façon sur les bobines de réception ;
- enregistrement de l'objet métallique (120) sur la base de la tension de réception (Ue) déterminée ; et
- commande d'une valeur efficace de la tension d'émission (Us) de telle sorte que la tension de réception (Ue) reste en dessous d'une valeur seuil prédéterminée.

8. Procédé selon la revendication 7, la tension d'émission alternative (Us) étant un signal modulé en largeur d'impulsion (Ut) et la valeur efficace de la tension d'émission (Us) étant commandée à l'aide d'un facteur impulsion/pause du signal (Ut).

9. Produit de programme informatique avec moyens de codage de programmation servant à la mise en oeuvre du procédé selon l'une quelconque des revendications 7 ou 8, lorsque le produit de programme informatique est exécuté sur un dispositif de traitement.

10. Produit de programme informatique selon la revendication 9, le produit de programme informatique étant mémorisé sur un support lisible par ordinateur.
